# EUROPEAN PATENT APPLICATION

(11) **EP 4 645 132 A1**
(43) Date of publication of application: **05.11.2025**
(21) Application number: 25171264.2
(22) Date of filing: 17.04.2025
(51) Int. Cl.: G06F 21/55, G06N 20/00, G06F 21/57

(54) **MACHINE LEARNED CONTEXTUAL CYBERSECURITY THREAT PRIORITIZATION**

(30) Priority: 29.04.2024 US 202418649748
(71) Applicant: CrowdStrike, Inc., Sunnyvale, CA 94086 (US)
(72) Inventor: Brautbar, Michael, Sunnyvale, 94086 (US); Kiraly, Daniel, Sunnyvale, 94086 (US); Petronaci, Michael, Sunnyvale, 94086 (US)
(74) Representative: Murgitroyd & Company

(57) **Abstract**

A cloud-based cybersecurity detection prioritization service prioritizes cybersecurity detections reported by endpoint client devices. The endpoint client devices report the cybersecurity detections to a cloud computing environment providing the cloud-based cybersecurity detection prioritization service. The endpoint client devices also report client machine contexts sampled from the endpoint client devices. The client machine contexts are compared to a cybersecurity machine contextual profile generated by a machine learning model trained using the client machine contexts sampled from the endpoint client devices. The cybersecurity detection prioritization service prioritizes the cybersecurity detections based on the cybersecurity machine contextual profile. The cloud-based cybersecurity detection prioritization service thus provides a quick ranking or categorization for queuing thousands of daily reports of viruses, hacks, and other cybersecurity detections. Prioritization allows for timely mitigations by humans of these alerts that minimize breaches.

## Description

### BACKGROUND

The subject matter described herein generally relates to computers and, more particularly, the subject matter relates to computer security and to intrusion detection.

Cybersecurity threats are always increasing. Every day, a cybersecurity service provider may receive thousands of reports of viruses, hacks, and other suspicious computer behavior. These cybersecurity detections are often analyzed and assessed by human experts as truly suspicious (a true positive report) or as harmless activity (a false positive report). Needless to say, human assessment requires great skill and much time. As the volume of cybersecurity detections is always increasing, the human experts need tools that help quickly mitigate risk of breaches.

### SUMMARY

A cybersecurity detection prioritization service prioritizes cybersecurity detections associated with client devices. The client devices report the cybersecurity detections, or the client devices report metadata on which cybersecurity detections can be based, to a cloud computing environment providing the cybersecurity detection prioritization service. The client devices also report client machine contexts sampled from the client devices. The client machine contexts are compared to a cybersecurity machine contextual profile generated by a machine learning model trained using current and/or historical client machine contexts sampled from the client devices. The cybersecurity detection prioritization service prioritizes the cybersecurity detections based on the cybersecurity machine contextual profile. The cybersecurity detection prioritization service thus provides a quick ranking or categorization of the thousands of cybersecurity detections reported each day. The cybersecurity detection prioritization service enables an elegantly simple and fast ranking (*e*.*g*., numerical 1-5), categorization (*e*.*g*., high, medium, low), or other prioritization that assesses and pre-screens the ever-increasing reports of suspiciousness from the client devices.

Accordingly there is provided a method, a system, and a computer program as detailed in the independent claims that follow. Advangtagous features are defined in the dependent claims.

### BRIEF DESCRIPTION OF THE SEVERAL VIEWS OF THE DRAWINGS

The features, aspects, and advantages of machine learned contextual cybersecurity threat prioritization are understood when the following Detailed Description is read with reference to the accompanying drawings, wherein:
FIGs. 1-3 illustrate some examples of prioritizing threats reported by endpoint clients;
FIG. 4 illustrates more examples of cybersecurity prioritization;
FIG. 5 illustrates examples of true positive reports;
FIG. 6 illustrates examples of a cybersecurity detection prioritization service;
FIGs. 7-8 illustrate examples of historical detection prioritizations;
FIGs. 9-10 illustrate more detailed examples of the cybersecurity detection prioritization service;
FIG. 11 illustrates examples of host monitoring;
FIG. 12 illustrates examples of client machine context;
FIG. 13 illustrates examples of service records;
FIGs. 14-15 illustrates example of cyberprobabilities;
FIG. 16 illustrates some examples of local prioritization;
FIGs. 17-19 illustrate examples of methods or operations that prioritize cybersecurity detections; and
FIG. 20 illustrates a more detailed example of an operating environment.

### DETAILED DESCRIPTION

Some examples relate to detection and prioritization of malicious computer activities, behaviors, and usage. As we know, nearly every day we read of another network hack, computer virus, or other cybersecurity threat. To stop these cybersecurity threats, many prudent computer users download and install cybersecurity sensory agents. Each cybersecurity sensory agent is a software product that monitors a device for cybersecurity threats. When the cybersecurity sensory agent detects a cybersecurity threat, the cybersecurity sensory agent sends data to a cloud service for deeper analysis. The data (such as metadata) describes the activities, behaviors, usage or other cybersecurity threat. The cybersecurity sensory agent, for example, may report a cybersecurity detection to the cloud service. Because so many prudent computer users rely on cybersecurity sensory agents, there are millions of cybersecurity sensory agents installed to millions of devices. Every day, then, the cloud service may receive thousands of reports of many different cybersecurity threats. These thousands of daily cybersecurity threats and detections can overwhelm computer and human resources.

A cybersecurity detection prioritization service prioritizes the cybersecurity threats and detections. Because the cloud service may receive thousands of daily cybersecurity threats and detections, the cybersecurity detection prioritization service assigns a priority to each cybersecurity threat and detection. The priority may be determined using a machine context representing the user's computer, smartphone or other device. The priority, for example, may be a numerical ranking (*e.g.,* 1-5) or a categorization (*e.g.,* high, medium, low). The cloud service may then allocate limited computer and human resources to the cybersecurity detections according to their priority. Urgent, high-priority cybersecurity detections, for example, may be first analyzed, while lesser-priority cybersecurity detections may be deferred. Each priority allows the cloud service to identify the cybersecurity detections that may be most harmful and that represent the most urgent cybersecurity threats.

Machine learned contextual cybersecurity threat prioritization will now be described more fully hereinafter with reference to the accompanying drawings. Machine learned contextual cybersecurity threat prioritization, however, may be embodied in many different forms and should not be construed as limited to the examples set forth herein. These examples are provided so that this disclosure will be thorough and complete and fully convey machine learned contextual cybersecurity threat prioritization to those of ordinary skill in the art. Moreover, all the examples of machine learned contextual cybersecurity threat prioritization are intended to encompass both structural and functional equivalents thereof. Additionally, it is intended that such equivalents include both currently known equivalents as well as equivalents developed in the future (*i.e.,* other elements developed that perform the same function, regardless of structure).

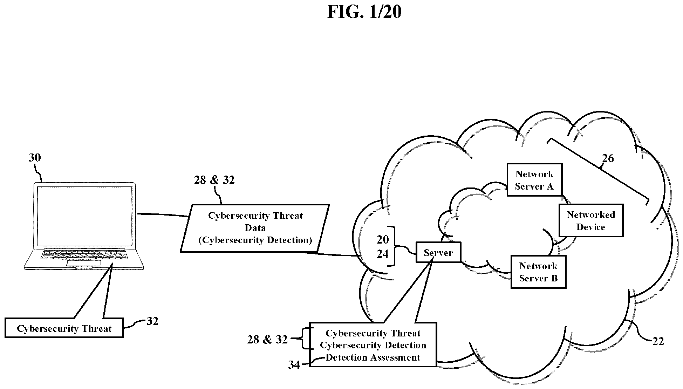

FIGs. 1-3 illustrate some examples of prioritizing threats reported by, or otherwise associated with, endpoint clients. A computer system 20 operates in a cloud computing environment 22. FIG. 1 illustrates the computer system 20 as a server 24. The computer system 20, though, may be a processor-controlled device, as later paragraphs will explain. In this example, the server 24 communicates via the cloud computing environment 22 (*e.g.,* public Internet, private network, and/or hybrid network) with other servers, devices, computers, or other networked members 26 operating within, or affiliated with, the cloud computing environment 22. The server 24 is programmed to prioritize a cybersecurity detection 28 associated with an endpoint client device 30. That is, when the client device 30 detects suspicious behavior, unusual login/location context, or other potential cybersecurity threat 32, the client device 30 sends data representing the cybersecurity threat 32 to a network address (*e.g.,* IP address) associated with the cloud computing environment 22. The data representing the cybersecurity threat 32, for example, may be metadata representing or describing the suspicious behavior, unusual login/location context, suspicious website or webpage, unusual or suspicious process, keystrokes/inputs, or other potential cybersecurity risk. The client device 30 may even locally determine and report the cybersecurity detection 28. Whatever the client device 30 reports, the client device 30 alerts or notifies the cloud computing environment 22 that the client device 30 has detected the potential cybersecurity threat 32. The client device 30, in other words, has detected a program, process, communication, behavior, location, or some other evidence that may indicate suspicious/malicious activity (such as malicious behavior, usage, or software/malware). When the cloud computing environment 22 receives the data and/or the cybersecurity detection 28, the cloud computing environment 22 conducts a detection assessment 34. The networked members 26 of the cloud computing environment 22 (such as the server 24, for example) conduct a deeper analysis of the detection assessment 34 and generate a recommendation or even a remediation.

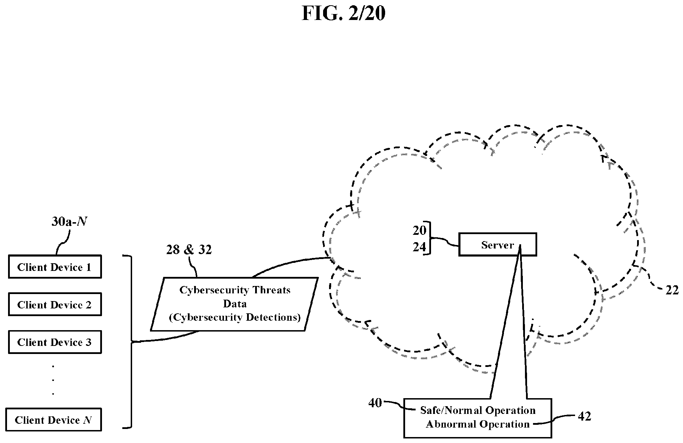

As FIG. 2 illustrates, the cloud computing environment 22 may receive thousands of the cybersecurity threats 32. The cloud computing environment 22 may interface with many different endpoint client devices 30a-N operating in the field. Indeed, there may be thousands or even millions of the client devices 30a-N reporting their respective cybersecurity threats 32 and/or the cybersecurity detections 28 to the cloud computing environment 22. When the cloud computing environment 22 receives the cybersecurity threats and/or the 32 cybersecurity detections 28, the cloud computing environment 22 may assess and screen each cybersecurity threat 32 and/or each cybersecurity detection 28 as safe/normal operation 40 or as an abnormal operation 42. Some or even all of the cybersecurity threats 32 and the cybersecurity detections 28 may even be further assessed or evaluated by human cybersecurity experts. As one may now understand, then, the cloud computing environment 22 must manage the ever-increasing volume of the cybersecurity threats 32 and the cybersecurity detections 28 reported by the client devices 30.

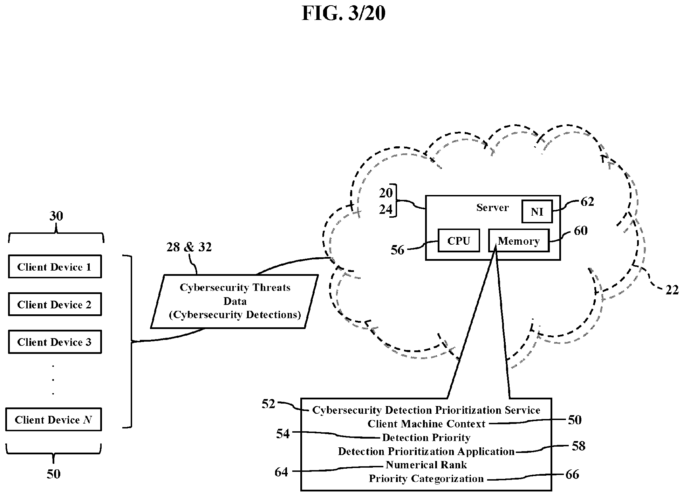

FIG. 3 illustrates examples of a prioritization scheme. As the cloud computing environment 22 receives the many cybersecurity threats 32 and/or the cybersecurity detections 28, the cloud computing environment 22 may prioritize each cybersecurity threat 32 and/or cybersecurity detection 28 according to its corresponding client machine context 50. Each endpoint client device 30, in other words, has a client machine context 50. As later paragraphs will explain, the client machine context 50 represents one or more hardware and/or software properties associated with the corresponding client device 30. The cloud computing environment 22 acquires the client machine contexts 50 associated with the corresponding client devices 30 (if available). The cloud computing environment 22 may then route, forward, or send the client machine context(s) 50 to the server 24 for analysis. The server 24 may thus provide a cloud-based cybersecurity detection prioritization service 52 that assigns a detection priority 54 to each cybersecurity threat 32 and/or cybersecurity detection 28 based on the client machine context 50 associated with the corresponding client device 30. The server 24, for example, has at least one hardware processor 56 (illustrated as "CPU/GPU") that executes a detection prioritization application 58 stored in a memory device 60. The server 24 also has network interfaces (illustrated as "NI") 62 to multiple communications networks (such as the cloud computing environment 22 illustrated in FIGs. 1-2), thus allowing bi-directional communications with networked devices. When the server 24 receives, or is notified of, the cybersecurity threat 32 and/or the cybersecurity detection 28, the detection prioritization application 58 may be a computer program, instruction(s), or code that instructs or causes the server 24 to assess the corresponding client machine context 50 associated with the reporting client device 30. The server 24, in other words, may prioritize the cybersecurity threat 32 and/or the cybersecurity detection 28, sent by or from the corresponding client device 30, based on the client machine context 50 associated with the client device 30. The cybersecurity detection prioritization service 52 and the detection prioritization application 58 thus act or function as a detection prioritizer engine that ingests the client machine context 50 as an input and generates the detection priority 54 as an output. Again, because the cloud computing environment 22 may receive hundreds or even thousands of daily cybersecurity threats 32 and cybersecurity detections 28, the cybersecurity detection prioritization service 52 assigns the detection priority 54 to each corresponding cybersecurity threat 32 and cybersecurity detection 28, based on the client machine context 50 associated with the reporting client device 30. The detection priority 54, as examples, may be a numerical ranking 64 (*e.g.,* 1-5) or a categorization 66 (*e.g.,* high, medium, low). Whatever the detection priority 54, the cybersecurity detection prioritization service 52 uses the client machine context 50 to identify the urgent cybersecurity threats 32 and cybersecurity detections 28 that are most-deserving of network/computer/human resources. The cybersecurity detection prioritization service 52 may also identify other cybersecurity threats 32 and cybersecurity detections 28 that are lesser-deserving, or least-deserving, of network/computer/human resources.

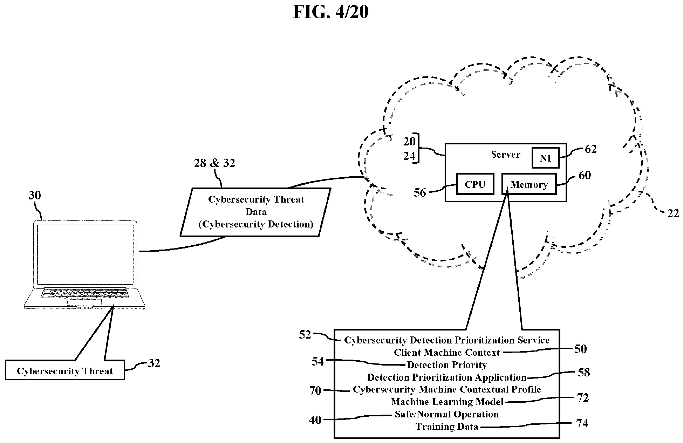

FIG. 4 illustrates more examples of cybersecurity prioritization. The cybersecurity detection prioritization service 52 may use artificial intelligence and/or machine learning to determine the detection priority 54 associated with the cybersecurity threat and/or detection 32/28. The detection prioritization application 58, for example, may instruct the server 24 to compare the client machine context 50 to a cybersecurity machine contextual profile 70 generated by a machine learning model 72. The cybersecurity machine contextual profile 70 may represent, statistically define, and/or specify the detection priorities 54 associated with different client machine contexts 50. The cybersecurity machine contextual profile 70, as examples, may describe the client machine contexts 50 that have been prioritized, categorized, assessed, and/or analyzed as the safe/normal operation 40. The cybersecurity machine contextual profile 70, in other words, may describe the detection priorities 54 associated with normal or harmless client machine contexts 50. The cybersecurity machine contextual profile 70 may thus represent current and/or historical information, data, bits/bytes, and/or other electronic content that is/are known to indicate the client machine contexts 50 and the detection priorities 54 associated with safe/normal operation 40. Whatever information or data is represented by the client machine context 50, that information or data may be compared to the cybersecurity machine contextual profile 70. If the electronic content represented by the client machine context 50 equals, matches, satisfies, lies within, or conforms to the cybersecurity machine contextual profile 70, then the detection prioritization application 58 may determine the corresponding detection priority 54 that represents the safe/normal operation 40. So, even though the endpoint client device 30 (illustrated as a laptop computer) reported the cybersecurity threat 32 and/or the cybersecurity detection 28, the cybersecurity machine contextual profile 70 may reveal that the client machine context 50 is actually normal or harmless hardware/software properties, behaviors, identities, locations, or other data, as determined by the cybersecurity machine contextual profile 70. The cybersecurity detection 28, in other words, may be a false alarm and thus assigned a lower detection priority 54. The client machine context 50 lacks electronic content identified as suspicious or maliciousness as defined or specified by the cybersecurity machine contextual profile 70.

The server 24 may thus identify the detection priority 54. Because the machine learning model 72 may build the cybersecurity machine contextual profile 70, the machine learning model 72 may statistically predict a range or ranges of the safe/normal operation 40 and the corresponding detection priority or priorities 54. The cybersecurity machine contextual profile 70, in other words, may specify hardware and/or software properties associated with the client device(s) 30 that describe ranges of the safe/normal operation 40. The cybersecurity machine contextual profile 70 may also specify the pre-determined or pre-defined detection priorities 54 that are assigned to the ranges of the safe/normal operation 40. As a simple example, the machine learning model 72 may generate the cybersecurity machine contextual profile 70 using Gaussian probability distributions based on machine contextual training data 74 derived from historical and/or current client machine contexts 50 and/or the detection priorities 54. One or more standard deviations and confidence intervals may then be calculated to predict ranges of the safe/normal operation 40 and the detection priorities 54. As the detection prioritization application 58 inspects the current client machine context 50 and/or the cybersecurity detection 28, the statistical models may be used to predict that the client machine context 50 lies within, or deviates or differs from, the cybersecurity machine contextual profile 70.

The server 24 may predict the detection priority 54. When data associated with the current client machine context 50 conforms to the cybersecurity machine contextual profile 70, the detection prioritization application 58 may thus instruct the server 24 to further predict or generate the detection priority 54. The server 24 may thus generate the detection priority 54 as an output, and the detection priority 54 may have a value, rank, or category that represents the safe/normal operation 40. That is, even though the client device 30 reported the cybersecurity threat 32 and/or the cybersecurity detection 28 as possible suspicious or maliciousness activity, the cybersecurity machine contextual profile 70 may actually reveal the client machine context 50 to be normal or harmless hardware/software machine properties. Because the client machine context 50 may be statistically described as the safe/normal operation 40, the detection prioritization application 58 may instruct the server 24 to label, rank, or classify the cybersecurity threat/detection 32/28 with the corresponding low detection priority 54. The cybersecurity threat/detection 32/28, in simple words, is likely a false alarm based on the client machine context 50. The detection prioritization application 58 may further label, sort, rank, or classify the cybersecurity threat/detection 32/28 as benign, low detection priority 54, and/or not requiring further investigation. Urgent resources may thus be allocated to other, higher-priority cybersecurity threats/detections 32/28.

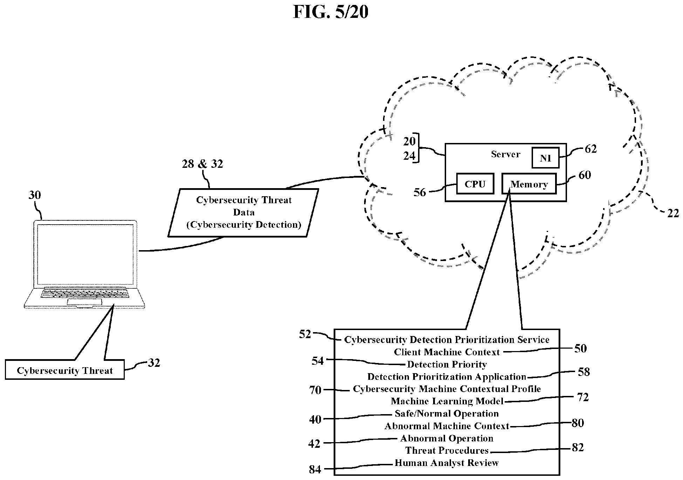

FIG. 5 illustrates examples of true positive reports. When the server 24 compares the client machine context 50 to the cybersecurity machine contextual profile 70 (perhaps as instructed by the detection prioritization application 58), the client machine context 50 may not conform to the cybersecurity machine contextual profile 70. The data, values, or electronic content associated with the client machine context 50, in other words, may fail to equal, match, satisfy, or lie within the safe/normal operation 40, as statistically defined or specified by the cybersecurity machine contextual profile 70. Because the client machine context 50 cannot be characterized as safe/normal operation 40, the detection prioritization application 58 may determine that the client machine context 50 is an outlier or abnormal machine context 80. The client machine context 50 may thus describe abnormal, anomalous, or perhaps even harmful hardware/software machine properties. The detection prioritization application 58 instructs the server 24 to generate the detection priority 54 as an output. The detection priority 54 identifies the client machine context 50 as the abnormal machine context 80 and/or as the abnormal operation 42. The detection prioritization application 58, for example, may determine detection priority 54 based on the cybersecurity machine contextual profile 70. The detection prioritization application 58, as another example, may assign a high value, rank, or category to the detection priority 54 based merely on the abnormal machine context 80 and/or the abnormal operation 42. All abnormal machine contexts 80, for example, may be ranked or categorized as urgent. The cybersecurity threat/detection 32/28 may thus be a true positive report of suspicious/malicious client activity. The detection prioritization application 58 may further instruct the client device 30 to implement notification/quarantine/isolation/halt or other urgent threat procedures 82. The detection prioritization application 58 may also hand-off and/or queue the cybersecurity threat/detection 32/28 for a human analyst review 84 by the cybersecurity subject matter experts. Because the client machine context 50 has been screened and preliminarily assessed as the abnormal machine context 80, the detection prioritization application 58 may route the cybersecurity threat/detection 32/28 to a human expert or group of human experts for an urgent, deep-dive analysis.

Computer functioning is greatly improved. Malicious software can ruin computer operations. The server 24 quickly identifies suspicious/malicious abnormal machine contexts 80 to minimize damage to the client devices 30. Because the detection prioritization application 58 may utilize the machine learning model 72, the cybersecurity detection prioritization service 52 is very fast and very simple to execute. The server 24 need merely compare the client machine context 50 to the ranges referenced by the cybersecurity machine contextual profile 70. The cybersecurity machine contextual profile 70 consumes little space (in bits/bytes) in the memory device 60. Moreover, because comparisons may be simple logical statements, the hardware processor 56 requires less cycles and less time to classify and prioritize the client machine context 50. Computer resources are reduced, and less electrical power is required to test for presence of the abnormal machine context 80. The cybersecurity detection prioritization service 52 is thus very fast and very simple, allowing the server 24 to quickly assess the thousands or millions of cybersecurity threats/detections 32/28. The cybersecurity detection prioritization service 52 thus greatly improves computer functioning of the server 24 when detecting abnormal machine contexts 80.

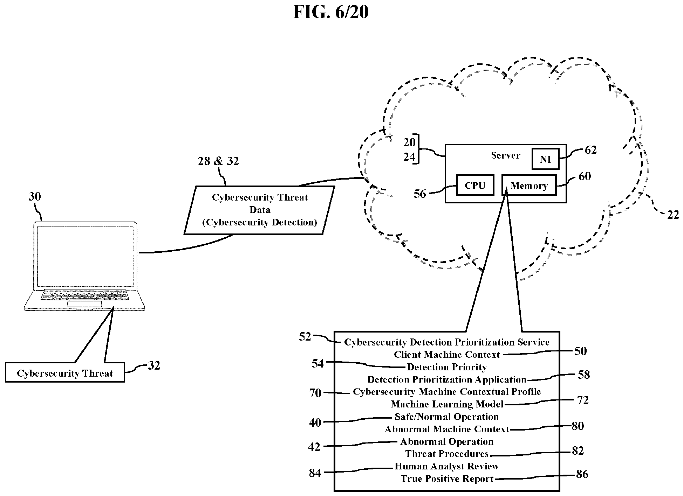

FIG. 6 illustrates more examples of the cybersecurity detection prioritization service 52. Here the cybersecurity machine contextual profile 70 may be created/trained to statistically define the outlier or abnormal machine contexts 80. The machine learning model 72, in other words, may be trained to build a statistical model that predicts the detection priority 54, based on evidence of the outlier or abnormal machine contexts 80. The cybersecurity machine contextual profile 70 may thus statistically specify hardware and software client machine properties that describe the range of the outlier or abnormal machine contexts 80. The client machine properties associated with the outlier or abnormal machine contexts 80 may be predetermined or predefined based on experimental malware detonations and other cybersecurity evaluation techniques. If the client machine context 50 conforms to the cybersecurity machine contextual profile 70, then the detection prioritization application 58 may instruct the server 24 to generate the detection priority 54 and to label, rank, sort, or classify the cybersecurity threat/detection 32/28 as a true positive report 86 of suspicious/maliciousness client machine context 50. If, however, the client machine context 50 fails to conform to the cybersecurity machine contextual profile 70, then the detection prioritization application 58 may instruct the server 24 to generate the detection priority 54 and to label, rank, sort, or classify the cybersecurity threat/detection 32/28 as the safe/normal operation 40.

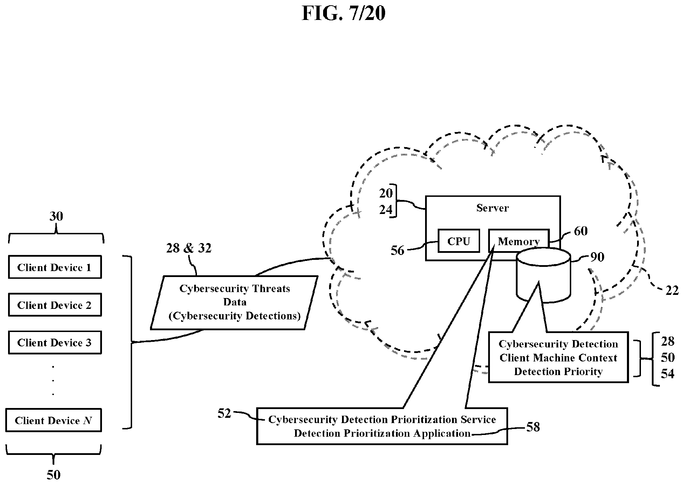

FIGs. 7-8 illustrate examples of historical detection prioritizations. As this disclosure above explained, every day the cloud computing environment 22 may receive thousands of the cybersecurity threats/detections 32/28 and the client machine contexts 50. The cybersecurity threats/detections 32/28 and the client machine contexts 50 may be sent by the client devices 30. While this disclosure only illustrates a few client devices 30a-*N*, in actual practice there may be millions of client devices 30 reporting thousands of daily cybersecurity threats/detections 32/28 and client machine contexts 50. Each cybersecurity threat/detection 32/28, and each client machine context 50, may then be scrutinized by the cloud computing environment 22 and/or by human cybersecurity expert analysts. Each client machine context 50, for example, may be assessed as the safe/normal operation 40 and/or as the abnormal machine contexts 80. Each client machine context 50, as another example, may be assigned its corresponding detection priority 54. Over time, then, the cybersecurity detection prioritization service 52 has precisely labeled and classified millions of the client machine contexts 50 and their corresponding detection priorities 54. The cybersecurity detection prioritization service 52 thus leverages this rich and extensive cybersecurity knowledge to prioritize the cybersecurity threats/detections 32/28.

The cybersecurity detection prioritization service 52 may thus retain service records. As the cybersecurity detection prioritization service 52 scrutinizes the thousands of daily cybersecurity threats/detections 32/28 and/or the client machine contexts 50, the cybersecurity detection prioritization service 52 comprehensively stores and logs the details of each cybersecurity threat/detection 32/28, its corresponding client machine context 50, and its corresponding detection priority 54 (perhaps as determined by the detection prioritization application 58 and/or by the human cyber security expert analysts). The cybersecurity detection prioritization service 52 may thus retain vast amounts of institutional cybersecurity knowledge developed over days/weeks/months/years by analyzing and prioritizing the client machine contexts 50. The cybersecurity detection prioritization service 52 may thus implement a network architecture or component that represents this historical cybersecurity expertise. FIGs. 7-8, for example, illustrate a networked, electronic database 90. The electronic database 90 stores electronic records of each cybersecurity threat/detection 32/28, its corresponding client machine context 50, and its corresponding detection priority 54.

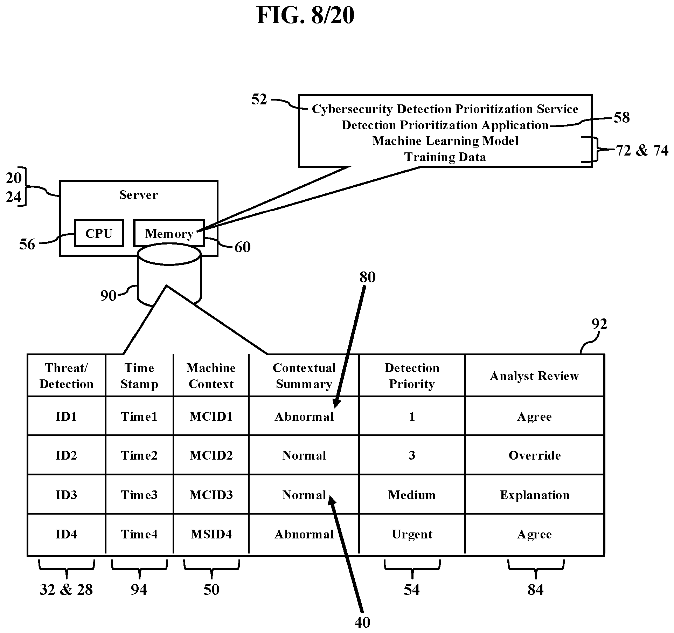

The cybersecurity detection prioritization service 52 thus maintains a rich repository of historical cybersecurity knowledge. As the cloud computing environment 22 receives and assesses the cybersecurity threats/detections 32/28 and the corresponding client machine contexts 50, the cloud computing environment 22 may collect and store each cybersecurity threat/detection 32/28, the corresponding client machine context 50, and the corresponding detection priority 54 to the electronic database 90. While the electronic database 90 may be remotely stored and accessed/queried via the cloud computing environment 22, for simplicity FIG. 7 illustrates the electronic database 90 as being locally stored in the memory device 60 of the server 24. Even though the electronic database 90 may have a logical structure, a relational database is perhaps easiest to understand. FIG. 8 thus illustrates the electronic database 90 as a table 92 having row and columnar database entries that map, relate, convert, or associate different cybersecurity threat/detection 32/28 to its corresponding client machine context 50 and to its corresponding detection priority 54. As the many client machine contexts 50 are routed to the server 24, the detection prioritization application 58 may add database entries that log each cybersecurity threat/detection 32/28 to its corresponding client machine context 50 and to its corresponding detection priority 54. The detection prioritization application 58 may also log, and/or assign, one or more timestamps 84 to the service records. Moreover, if the cybersecurity threat/detection 32/28, the client machine context 50, and/or the detection priority 54 was/were scrutinized by a human cybersecurity expert analyst, the electronic database 90 may further log and identify the name/identifier of the human cybersecurity expert analyst and his/her/their human analyst review 84. The electronic database 90 may log notes or analysis used/applied by the human cybersecurity expert analyst(s) to assess the cybersecurity threat/detection 32/28, the client machine context 50, and/or the detection priority 54. Indeed, the human cybersecurity expert analyst may even override and enter a new/different detection priority 54, based on expert opinion. So, when the cybersecurity detection prioritization service 52 receives and evaluates a current or new cybersecurity threat/detection 32/28, the cybersecurity detection prioritization service 52 may query the electronic database 90 and identify and/or retrieve any matching or similar historically-assessed cybersecurity threats/detections 32/28, client machine contexts 50, and/or the detection priorities 54. If a matching database entry is determined, then the detection prioritization application 58 may identify and/or retrieve any corresponding columnar/row entries.

The cybersecurity detection prioritization service 52 thus leverages this rich and extensive contextual knowledge developed by the best cybersecurity threat hunters. The electronic database 90 may be tapped to train the machine learning model 72. The detection prioritization application 58, for example, may retrieve any of the database entries and apply the database entries as the cybersecurity training data 74 to the machine learning model 72. The machine learning model 72 may thus generate the cybersecurity machine contextual profile 70 that statistically describes the safe/normal operation 40 (and/or the outlier or abnormal machine contexts 80) and their corresponding detection priorities 54. Indeed, the human analyst review 84 (determined by the human cybersecurity subject matter expert) may be exclusively or solely used to train the machine learning model 72, thus generating the cybersecurity machine contextual profile 70 to reflect the knowledge acquired by the best threat hunters. So, when the detection prioritization application 58 inspects the client machine context 50, the machine learning model 72 accurately generates the detection priority 54, based on the deep-dive analyses that only the human cyber security expert analyst(s) can provide. The cybersecurity detection prioritization service 52 may thus automate the prioritization of the cybersecurity detections 28 to effectively utilize computer and human resources. The cybersecurity detection prioritization service 52 reflects vast amounts of institutional cybersecurity knowledge developed by the human cyber security expert analysts.

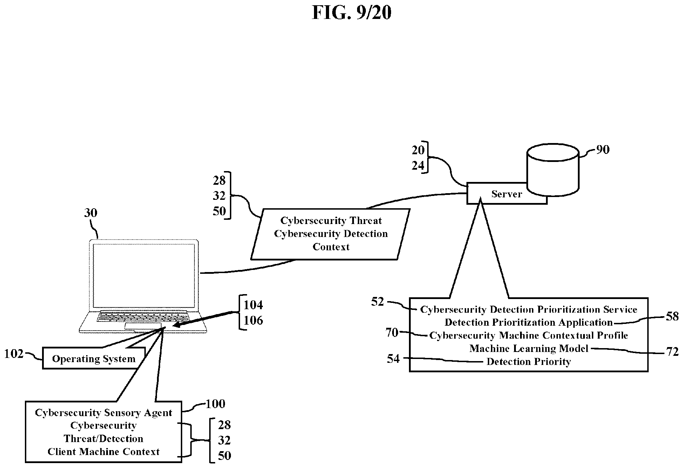

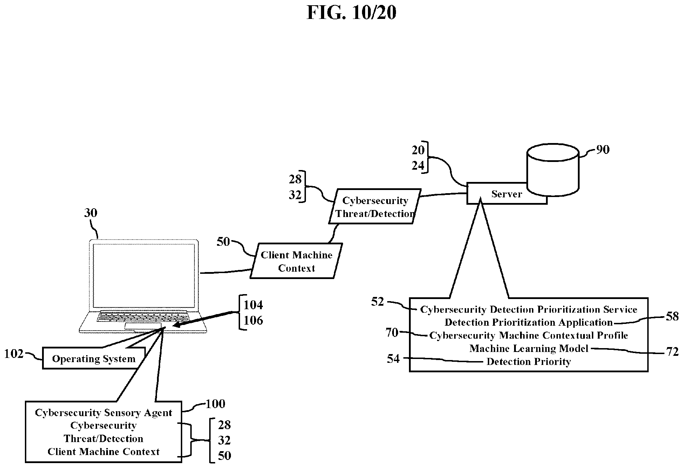

FIGs. 9-10 illustrate more detailed examples of the cybersecurity detection prioritization service 52. The client device 30 (again illustrated as the laptop computer) downloads, stores, and executes an endpoint cybersecurity sensory agent 100. The cybersecurity sensory agent 100, in other words, is installed on the corresponding client device 30. The cybersecurity sensory agent 100 includes computer program, code, or instructions that scan and monitor its corresponding client device 30 for events, communications, processes, activities, behaviors, data values, usernames/logins, locations, contexts, and/or patterns that indicate evidence of suspicious/malicious activity. The cybersecurity sensory agent 100, for example, interfaces with an operating system 102 to establish event notifications of hardware and software events. The client device 30 stores the operating system 102 in a memory device 104, and a hardware processor (such as a CPU/GPU) 106 executes the operating system 102. Should the event notifications indicate evidence of suspicious/malicious activity and the cybersecurity threat/detection 32/28, the cybersecurity sensory agent 100 instructs its host client device 30 to generate and to report the cybersecurity threat/detection 32/28 to the cloud computing environment 22 (illustrated in FIGs. 1-7). The cybersecurity sensory agent 100, however, may also interface with the operating system 102 to obtain the client machine context 50. The cybersecurity sensory agent 100 may thus also send or report the client machine context 50 to the cloud computing environment 22. FIG. 9, as an example, illustrates the cybersecurity threat/detection 32/28 including information, data, or content representing the client machine context 50. As FIG. 10 illustrates, though, the client machine context 50 may be sent as a separate message from the cybersecurity threat/detection 32/28. However the cybersecurity threat/detection 32/28 is reported, when the cloud computing environment 22 receives the cybersecurity threat/detection 32/28 and the client machine context 50, the cloud computing environment 22 may route the cybersecurity threat/detection 32/28 and/or the client machine context 50 to the network address (*e.g.,* IP address) associated with the server 24 hosting or providing the cybersecurity detection prioritization service 52. The server 24 logs the cybersecurity threat/detection 32/28 and the client machine context 50 in the electronic database 90. The cybersecurity threat/detection 32/28 and/or the client machine context 50 may include a detailed description of the client device 30 (*e.g.,* make, model, software and hardware inventory) and the events, communications, activities, behaviors, data values, and/or patterns that triggered reporting. The server 24 executes the detection prioritization application 58 and compares the client machine context 50 to the cybersecurity machine contextual profile 70 generated by the machine learning model 72 (as this disclosure above explains). The detection prioritization application 58 instructs the server 24 to assign the detection priority 54 to the cybersecurity threat/detection 32/28, based on the comparison of the client machine context 50 to the cybersecurity machine contextual profile 70. The detection prioritization application 58 may then add entries to the electronic database 90 that map, associate, or otherwise or record the detection priority 54 with the cybersecurity threat/detection 32/28 and with the client machine context 50. Once the detection priority 54 is determined, the cloud computing environment 22 (such as the server 24) may escalate, or de-escalate, the cybersecurity threat/detection 32/28 for analysis and remediation.

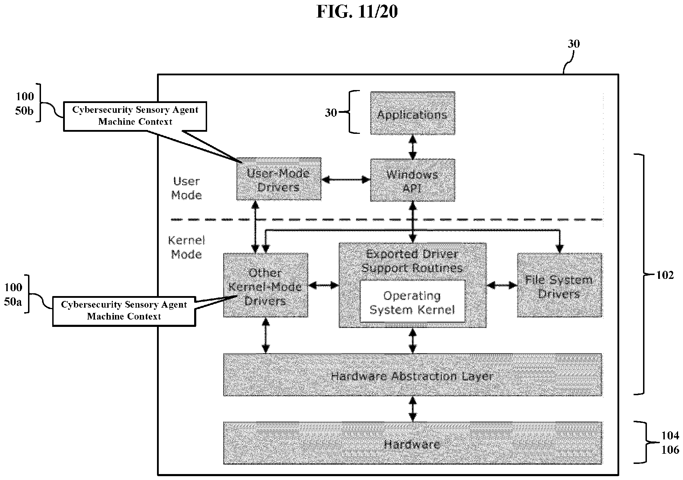

FIG. 11 illustrates examples of host monitoring. The cybersecurity sensory agent 100 monitors the client device 30. The cybersecurity sensory agent 100 interfaces with the operating system 102 executed by the client device 30. The cybersecurity sensory agent 100 is a software application or program code stored in the memory device 104 of the client device 30 and executed by the hardware processor 106 operating within the client device 30. The cybersecurity sensory agent 100 may thus have permissions to monitor kernel-level client machine context 50a and/or user-mode client machine context 50b associated with the client device 30. Should the cybersecurity sensory agent 100 detect suspicious activity, the cybersecurity sensory agent 100 cooperates with the operating system to report the cybersecurity threat/detection 32/28 and the client machine context 50 to the cloud computing environment 22 (as above explained).

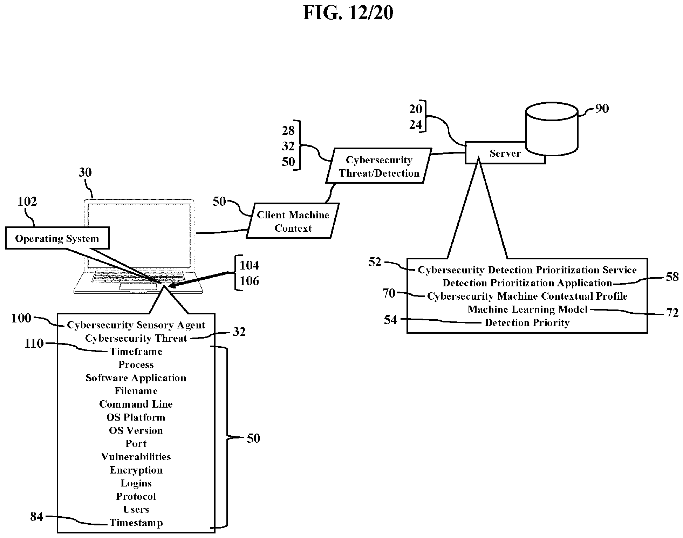

FIG. 12 illustrates examples of the client machine context 50. When the cybersecurity sensory agent 100 detects suspicious behavior, unusual login/location context, or other potential cybersecurity threat 32, the cybersecurity sensory agent 100 reports the cybersecurity threat 32 and/or detection 28. The cybersecurity sensory agent 100, however, may also determine and report the client machine context 50 (as above explained). The client machine context 50 represents hardware and/or software properties associated with the client device 30 within a timeframe 110 of the cybersecurity threat/detection 32/28. Because the cybersecurity sensory agent 100 interfaces with its host's operating system 102, the operating system 102 may notify the cybersecurity sensory agent 100 of a software process requested by a software application. The operating system 102, for example, notifies the cybersecurity sensory agent 100 of the software application, a filename, a command line, and other information associated with the process. Moreover, the operating system 102 may also notify the cybersecurity sensory agent 100 of the client machine context 50 at or within the timeframe 110 of the process. For example, before the operating system 102 starts or initializes the process, the operating system 102 alerts the cybersecurity sensory agent 100 (perhaps via event notifications) of the process and the client machine context 50. The operating system 102 and the cybersecurity sensory agent 100, as more examples, may cooperate to initiate a timer (perhaps at the start of the process by the operating system 102). The timer may thus increment from an initial value (perhaps zero) to a final value (perhaps representing a maximum permissible time in fractions of or in whole seconds) defining or associated with the timeframe 110. The cybersecurity sensory agent 100 may then include the client machine context 50 (perhaps describing the timeframe 110) in the cybersecurity threat/detection 32/28 sent to the cloud computing environment 22. The cybersecurity sensory agent 100, however, may send data representing the client machine context 50 in a separate message to the cloud computing environment 22. The cybersecurity sensory agent 100 thus alerts or notifies the cloud computing environment 22 that suspicious activity has been detected (*e.g.,* the program or application, the process, communication, behavior, location, or some other evidence of suspicious/malicious activity). The cybersecurity sensory agent 100 also alerts or notifies the cloud computing environment 22 of the client machine context 50, perhaps also within the timeframe 110 of the process. The cybersecurity sensory agent 100 may thus collect and report the client machine context 50 within the maximum permissible time of the timeframe 110. The maximum permissible time of the timeframe 110, as more examples, may represent a duration of the process executed by the operating system 102. The cybersecurity sensory agent 100 may thus be required to collect, and perhaps report, one or more client machine contexts 50 prior to expiration of the timeframe 110 (such as prior to or at a final execution or completion of the process). When the timer expires, the operating system 102 and/or the cybersecurity sensory agent 100 may reinitialize the timer at the initial value.

The client machine context 50 describes the client device 30. The client machine context 50 includes data or information representing machine properties that are associated with the hosting client device 30. The client machine context 50, however, may represent machine properties that persist beyond a duration of the computer process requested by the software application. The client machine context 50, for example, may uniquely describe the cybersecurity sensory agent 100 and/or the client device 30 (such as an agent identifier and/or a client machine identifier). The client machine context 50 may describe a machine platform (such as, for example, whether the client device 30 is a MICROSOFT WINDOWS^{®} platform, an APPLE MACOS^{®} platform, a LINUX^{®} platform, or a GOOGLE ANDROID^{®} platform). The client machine context 50 may further describe a version of the operating system 102. The client machine context 50 may further describe a communications hardware and/or software port (*e*.*g*., Ethernet, USB, TCP/UDP listening port number, port 80). The client machine context 50 may further describe or inventory other software application(s) running on the client device 30 (such as the CHROME^{®} browser or the MICROSOFT OUTLOOK^{®} calendar and email product). The client machine context 50, as more examples, may describe unmitigated vulnerabilities discovered, identified, or present on the client device 30. The client machine context 50, as yet more examples, may describe an encryption associated with the client device 30 (such as whether the memory device 104 is encrypted). The client machine context 50, as more examples, may describe a count or number of successful, and/or unsuccessful, logins, per user of the client device 30, in given time period (such as prior to, during, and/or after the timeframe 110). The client machine context 50, as still more examples, may describe count or number of times a TCP/IP protocol (*e*.*g*., HTTPS protocol) was invoked in given time period (such as prior to, during, and/or after the timeframe 110). The client machine context 50, as even more examples, may describe count or number of different users of the client device 30, in given time period (such as prior to, during, and/or after the timeframe 110). The cybersecurity sensory agent 100 and the operating system 102 cooperate to specify and to obtain the client machine context 50. The cybersecurity sensory agent 100, for example, may periodically or randomly acquire and store one or more snapshots or samples of the client machine context 50 prior to, during, and/or after during the timeframe 110. Each contextual snapshot or sample inventories and timestamps 84 the client machine context 50 at different periodic or random times prior to, during, and/or after the timeframe 110. The cybersecurity sensory agent 100 may thus capture and store different client machine contexts 50 that persist before, during, and after/beyond the timeframe 110 surrounding the computer process requested by the software application.

The cybersecurity sensory agent 100 may report each client machine context 50 to the cloud computing environment 22. The cybersecurity sensory agent 100, for example, may report each timestamped client machine context 50 to the IP address associated with the cloud computing environment 22. The cybersecurity sensory agent 100, however, may additionally or alternatively report each timestamped client machine context 50 with the cybersecurity threat/detection 32/28. Recall, though, that in actual practice there may be millions of the cybersecurity sensory agents 100 installed to millions of client devices 30 in the field (as explained with reference to FIGs. 2-3). The cloud computing environment 22 may thus receive millions of different client machine contexts 50 and/or millions of different cybersecurity threats/detections 32/28. The cloud computing environment 22 routes the client machine contexts 50 and the cybersecurity threats/detections 32/28 to the cloud computing environment 22, and/or the computer system 20, providing the cybersecurity detection prioritization service 52.

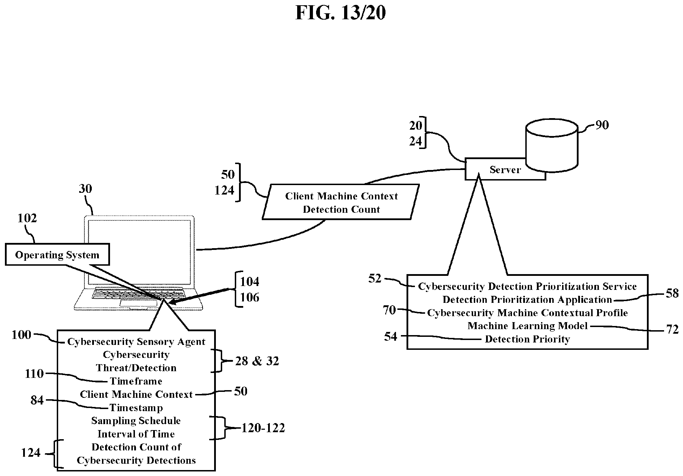

FIG. 13 illustrates more examples of service records. Each cybersecurity sensory agent 100 may be configured, or programmed, or polled to periodically sample and report its current client machine context 50, perhaps according to a sampling schedule 120. Each cybersecurity sensory agent 100, for example, periodically acquires a contextual snapshot or sample of the client machine context 50, perhaps according to an interval 122 of time. While the timeframe 110 and the interval 122 may have a value (*e*.*g*., seconds, minutes, hours, days), FIG. 13 illustrates a simple example of hourly reports. That is, the cybersecurity sensory agent 100 hourly reports its host's current client machine context 50. The timeframe 110, the sampling schedule 120, and the interval 122 are each 60 minutes. So, every hour (as repetitively determined by the time), the cybersecurity sensory agent 100 may interface with its host operating system 102 to report its current client machine context 50. Moreover, the cybersecurity sensory agent 100 may also report a numerical detection count 124 of its cybersecurity threats/detections 32/28 generated during the past hour. The cybersecurity sensory agent 100 thus sends an hourly contextual snapshot or sample of the client machine context 50 and its hourly tally or sum of the cybersecurity threats/detections 32/28. Recall, though, that there may be millions of the cybersecurity sensory agents 100 installed in the field (as explained with reference to FIGs. 2-3). In actual practice, then, the cloud computing environment 22 and/or the computer system 20 may receive millions of hourly reports of different client machine contexts 50 and different detection counts 124.

The cybersecurity detection prioritization service 52 may log service records. As the cloud computing environment 22 receives the millions of hourly reports from the cybersecurity sensory agents 100, the cybersecurity detection prioritization service 52 logs each report. Each cybersecurity sensory agent 100, for example, reports its current client machine context 50 and its detection count 124 generated during the timeframe 110, the sampling schedule 120, and/or the interval 122 (such as the past hour). The cloud computing environment 22 logs and stores the reports as entries in the electronic database 90. The electronic database 90 may thus maintain service records of each client machine context 50, each cybersecurity detection 28, the detection count 124, the timestamp 84, and the corresponding detection priority 54. The electronic database 90 may also log records of the machine learning model 72 that was used to generate the detection priority 54. Because the cybersecurity detection prioritization service 52 maintains the rich and detailed electronic database 90, the cybersecurity detection prioritization service 52 may query for and retrieve historical or past reports. The detection prioritization application 58, for example, may query for the machine identifier associated with the client device 30, the agent identifier associated with the cybersecurity sensory agent 100, and/or another query search parameter. The detection prioritization application 58 may then retrieve the database entries that correspond to the query search parameter. The detection prioritization application 58 may thus identify previous/past/historical reports from predecessor timeframes 110, sampling schedules 120, and/or intervals 122.

The cybersecurity detection prioritization service 52 may then prioritize. Because the cloud computing environment 22 may receive many cybersecurity threats/detections 32/28 from the cybersecurity sensory agents 100, the cybersecurity detection prioritization service 52 determines which cybersecurity threats/detections 32/28 require urgent analysis and remediation and which cybersecurity threats/detections 32/28 may be analytically deferred. For a given unit of time of interest (such as the 1 hour timeframe 110), and for each cybersecurity threat/detection 32/28, the cybersecurity detection prioritization service 52 may retrieve a previous/past/historical report from a preceding timeframe 110 (for example, more than one timeframe 110 or 1 hour ago). The cybersecurity detection prioritization service 52 may even query the electronic database 90 and retrieve previous/past/historical reports for any number of the cybersecurity sensory agents 100. Indeed, the cybersecurity detection prioritization service 52 may utilize current and past reports for some, most, or all of the cybersecurity sensory agents 100 (such as a field population or total number of the client devices 30). The cybersecurity sensory agent 100, and thus the client device 30, may thus contribute a sample dataset (such as [*C, Y*], where *C* represents the values/parameters of the client machine context 50 and *Y* represents the detection count 124 during the 1-hour timeframe 110). The detection prioritization application 58 may then use the client machine context 50 and the detection count 124 to predict or quantify the cybersecurity threat/detection 32/28. For example, the detection prioritization application 58 may compare the client machine context 50 and the detection count 124 to the cybersecurity machine contextual profile 70 generated by the machine learning model 72. The machine learning model 72 may thus be trained using the client machine contexts 50 and their corresponding detection counts 124 sampled from the client devices 30. The client machine contexts 50 and the corresponding detection counts 124 may be further categorized or labeled with their corresponding detection priorities 54. The detection prioritization application 58 may thus quickly and easily determine the detection priority 54 for the client machine context 50 and the corresponding detection count 124.

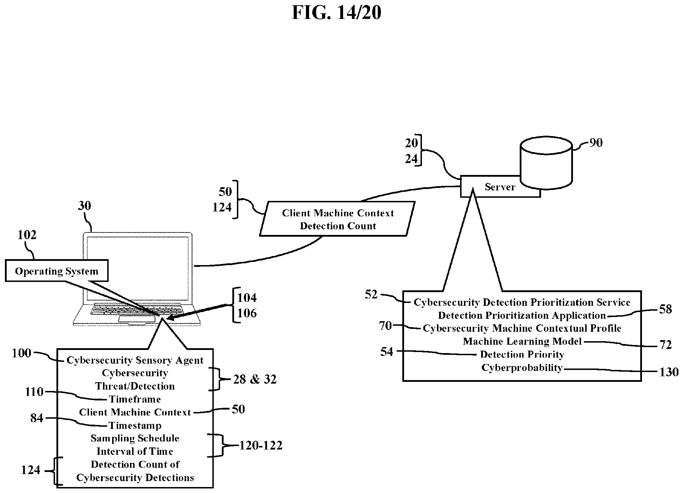

FIG. 14 illustrates examples of cyberprobabilities. The cybersecurity detection prioritization service 52 may determine a cyberprobability 130 of the cybersecurity threat/detection 32/28, based on the client machine context 50 and the detection count 124. The detection prioritization application 58 may compare the client machine context 50 and the detection count 124 to the cybersecurity machine contextual profile 70 generated by the machine learning model 72. The machine learning model 72, though, may be trained using the client machine contexts 50, their corresponding detection counts 124, and cyberprobabilities 130 of the cybersecurity threats/detections 32/28. The client machine contexts 50 and their corresponding detection counts 124, in other words, may be categorized or labeled with their corresponding cyberprobabilities 130 and their corresponding detection priorities 54. The detection prioritization application 58 may quantify the cyberprobability 130 that the client machine context 50 and the detection count 124 represent a cybersecurity threat/detection 32/28. Higher or greater cyberprobabilities 130 (*e.g.,* ≥ 70%) may represent abnormal machine contexts 80 and urgent detection priorities 54. Lower or smaller cyberprobabilities 130 (*e.g.,* ≤ 40%) may represent normal/safe operation 40 and deferred detection priorities 54. The cyberprobability 130 of the cybersecurity threat/detection 32/28 may thus profilely determine the detection priority 54 assigned by the cybersecurity detection prioritization service 52.

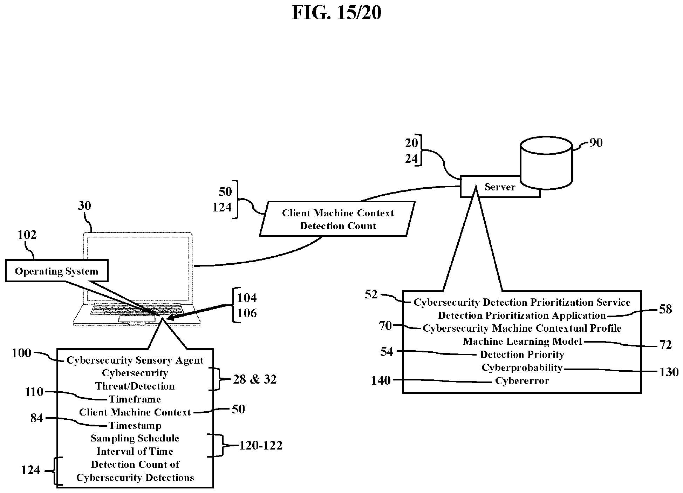

FIG. 15 illustrates more examples of the cyberprobabilities 130. The cybersecurity detection prioritization service 52 may further determine a cybererror 140 in the cyberprobability 130. The cybersecurity detection prioritization service 52 may use predictive modeling (such as the machine learning model 72) to quantify the expected cybererror 140 in the cyberprobability 130. The cybersecurity detection prioritization service 52, as an example, may apply the machine learning model 72 on 60% of randomly chosen samples (such as the sample reports logged in the electronic database 90) to determine the cyberprobability 130 of the cybersecurity threat/detection 32/28. The cybersecurity detection prioritization service 52 may then assess predictive performance on the remaining 40% of the dataset samples (*e*.*g*., the holdout set). The cybersecurity detection prioritization service 52 may then compute the mean absolute cybererror 140 between the predicted cyberprobability 130 of the cybersecurity threat/detection 32/28 and the true cyberprobability 130 values on the holdout set.

The cybersecurity detection prioritization service 52 prioritizes the thousands or millions of reported cybersecurity detections/threats 28/32. The cybersecurity detection prioritization service 52 may use one or more of the above mechanisms to prioritize the cybersecurity detections/threats 28/32 reported by the cybersecurity sensory agents 100. For example, when the unit of time ends (such as the 1-hour timeframe 110), the cybersecurity detection prioritization service 52 retrieves the current client machine context 50 and/or the detection count 124 and determines its corresponding cybererror 140 with respect to the predicted cyberprobability 130 of the cybersecurity threat 32. Cyberbreaches that affect the client machine context 50 will then produce anomalous predicted values. That is, their detection count 124 will substantially differ from their actual value (more typically that number will be much bigger than what expected, but having very small numbers can indicate a potential breach). The cybersecurity detection prioritization service 52 may then quantify how much the overall discrepancy measure (*e*.*g*., a mean absolute difference between predicted and true value) is with respect to an expected value. For example, for a cybersecurity detection "D," the cybersecurity detection prioritization service 52 may determine that its expected detection count 124 is 50% higher than its expected value determined from the historical service records. Whatever number depicts or represents the discrepancy, the cybersecurity detection prioritization service 52 may sort the cybersecurity detections/threats 28/32 according to their highest discrepancy first, pointing threat hunters to first mitigate those types of cybersecurity detections/threats 28/32.

Computer functioning is greatly improved. Conventional threat-hunting techniques are based on an analysis of computer commands intended to be executed by the client device 30. Conventional threat-hunting techniques thus use both static analysis (such as analyzing the content of a file to be executed) and behavioral analysis (such as analyzing the full operating system's current and parent process paths). These conventional threat-hunting techniques, though, have insight into the wider, and more accurate, client machine context 50 in which these commands are being run. The cybersecurity detection prioritization service 52 greatly improves computer functioning by identifying the cybersecurity detections 28 having the highest detection priority 54 for, and/or the greatest cyberprobability 130 of, cybersecurity threats 32. The cybersecurity detection prioritization service 52 dynamically tracks the client machine contexts 50 and enriches the cybersecurity detections/threats 28/32 with their corresponding detection priority 54. The cybersecurity detection prioritization service 52 sifts through millions of the daily cybersecurity detections/threats 28/32 and identifies true breaches in the making. The cybersecurity detection prioritization service 52 thus quantifies and emphasizes suspicious activity levels most deserving of urgent resources.

Computer functioning is further improved. Each day the server 24 may receive thousands or millions of the cybersecurity detections/threats 28/32 reported by the millions of the cybersecurity sensory agents 100. The server 24 must very quickly assess each cybersecurity detections/threats 28/32 to prevent damage to the client device 30. The server 24 must further quickly assess each cybersecurity detection/threat 28/32 to stop spread to and infection of other machines. However, because the server 24 executes the detection prioritization application 58 providing the cybersecurity detection prioritization service 52, the server 24 need only compare the cybersecurity detection/threat 28/32 to the cybersecurity machine contextual profile 70 using logical statements. The logical statements are quick and easy to execute (requiring reduced hardware resources and electrical power). The server 24 requires less time and resources to prioritize and to prevent the cybersecurity detection/threat 28/32.

The cybersecurity detection prioritization service 52 may be extended. The cybersecurity detection prioritization service 52 may collect other contextual data associated with the client device 30. The client machine context 50 may include chassis/hardware/software data that is persistent beyond the ephemeral computer process (illustrated in FIG. 12). The client machine context 50, for example, may describe whether the client device 30 stores sensitive information and/or whether certain types of software applications run on the machine (such as database applications, inventory applications, CRM applications, and other categories). The cybersecurity detection prioritization service 52 may further implement self-regressive components. The cybersecurity detection prioritization service 52, for example, may be configured to increase the sample window (*e*.*g*., the timeframe 110) to include a full history (such as a week if the unit of time is one hour) and then treat the problem as a one-dimensional time series forecasting with exogenous variables. The cybersecurity detection prioritization service 52 may thus account for variability that is not explained by the contextual information (*e*.*g*., the client machine context 50), but is still showing a spike.

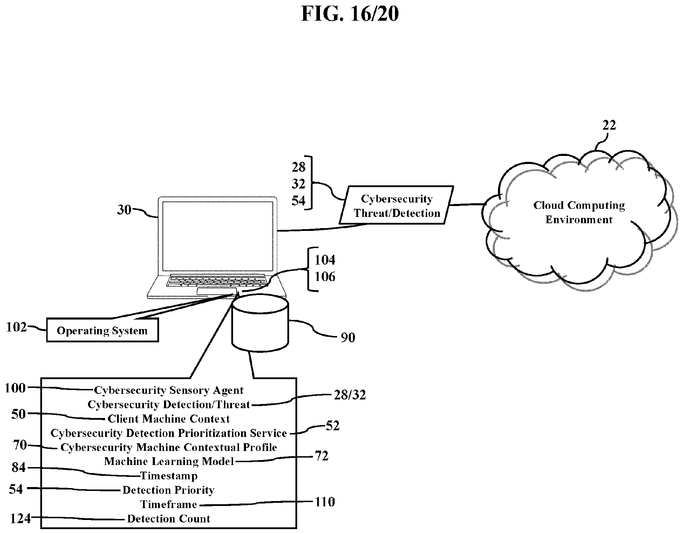

FIG. 16 illustrates some examples of local prioritization. When the endpoint cybersecurity sensory agent 100 (installed to the client device 30) detects the cybersecurity threat 32, the cybersecurity sensory agent 100 may generate and report the cybersecurity detection/threat 28/32 to the cloud computing environment 22. The cybersecurity sensory agent 100, however, may locally assess the cybersecurity threat 32 and/or the cybersecurity detection 28 and locally determine the detection priority 54. The endpoint cybersecurity sensory agent 100, in other words, may locally conduct and provide the cybersecurity detection prioritization service 52 with little, or no, reliance on the cloud computing environment 22. The cybersecurity sensory agent 100 may again cooperate with the operating system 102 and acquire one or more snapshots or samples of the client machine context 50, perhaps within the timeframe 110. The cybersecurity sensory agent 100 may log and store the client machine context(s) 50 as entries in the electronic database 90. The electronic database 90, for example, may be a local resource (*e*.*g*., stored in the memory device 104) that maintains service records of each client machine context 50, each cybersecurity detection 28, the detection count 124, the timestamp 84, and/or the corresponding detection priority 54. The cybersecurity sensory agent 100 may further include software programming, code, or instructions that locally compare the client machine context 50 to the cybersecurity machine contextual profile 70. The cybersecurity machine contextual profile 70 may have been locally generated by the machine learning model 72. The cybersecurity machine contextual profile 70, however, may have been remotely generated by the cloud computing environment 22 and downloaded to the client device 30. However the cybersecurity machine contextual profile 70 is obtained, the cybersecurity sensory agent 100 may instruct the client device 30 to assign the detection priority 54 to the cybersecurity detection/threat 28/32, based on the comparison of the client machine context 50 to the cybersecurity machine contextual profile 70. Once the detection priority 54 is determined, the cybersecurity sensory agent 100 may instruct the client device 30 to report the cybersecurity detection/threat 28/32 and the locally-generated detection priority 54 to the cloud computing environment 22. The cloud computing environment 22 may then escalate, or de-escalate, the cybersecurity detection/threat 28/32 for analysis and remediation, based on the locally-generated detection priority 54.

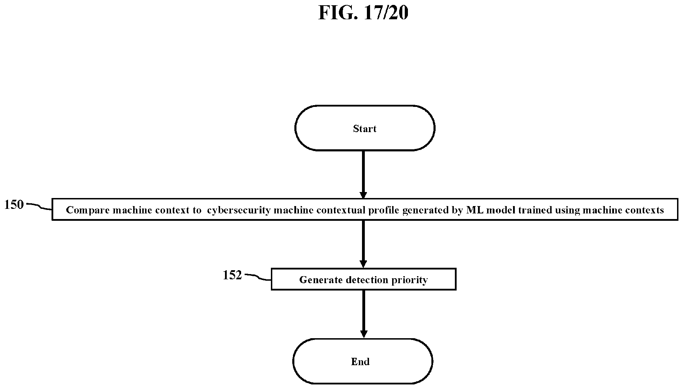

FIG. 17 illustrates examples of a method or operations executed by the computer system 20 that prioritizes the cybersecurity detection/threat 28/32 based on the client machine context 50. The computer system 20 compares the client machine context 50 to the cybersecurity machine contextual profile 70 generated by the machine learning model 72 trained using the client machine contexts 50 (Block 150). The computer system 20 generates the detection priority 54 based on the comparing of the client machine context 50 to the cybersecurity machine contextual profile 70 generated by the machine learning model 72 trained using the client machine contexts 50 (Block 152).

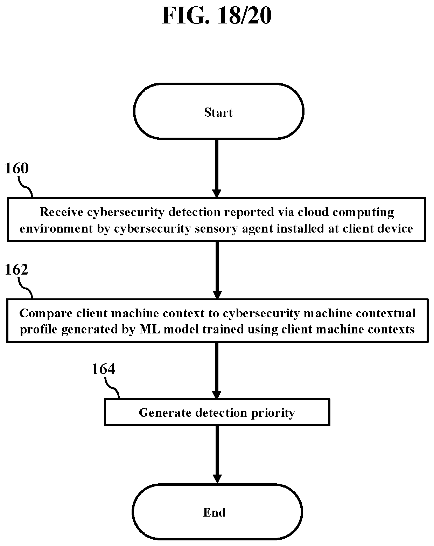

FIG. 18 illustrates examples of another method or operations that prioritize the cybersecurity detection/threat 28/32 based on the client machine context 50. The cybersecurity detection/threat 28/32, reported via the cloud computing environment 22 by the cybersecurity sensory agent 100 installed at the client device 28, is received (Block 160). The client machine context 50 is compared to the cybersecurity machine contextual profile 70 generated by the machine learning model 72 trained using the client machine contexts 50 (Block 162). The detection priority 54 is generated based on the comparing of the client machine context 50 to the cybersecurity machine contextual profile 70 generated by the machine learning model 72 trained using the client machine contexts 50 (Block 164).

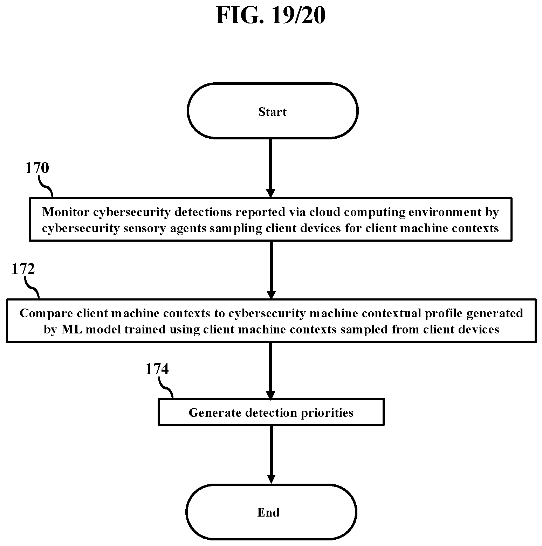

FIG. 19 illustrates examples of still more method or operations that prioritize the cybersecurity detections/threats 28/32. The cybersecurity detections 28 and/or threats 32 are monitored that are reported via the cloud computing environment 22 by the cybersecurity sensory agents 100 sampling the client devices 28 for the client machine contexts 50 (Block 170). The client machine contexts are compared to the cybersecurity machine contextual profile 70 generated by the machine learning model 72 trained using the client machine contexts 50 sampled from the client devices 28 (Block 172). The detection priorities 54 are generated based on the comparing of the client machine contexts 50 to the cybersecurity machine contextual profile 70 generated by the machine learning model 72 trained using the client machine contexts 50 sampled from the client devices 28 (Block 174).

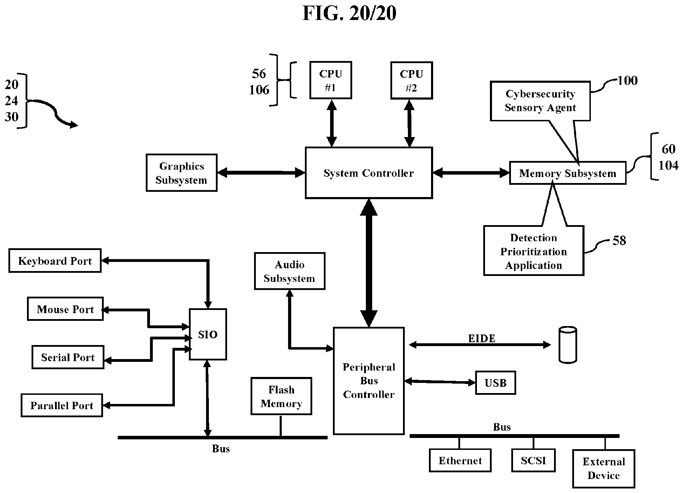

FIG. 20 illustrates more detailed examples of the operating environment. FIG. 20 is a more detailed block diagram illustrating the computer system 20 and the client device 30. The detection prioritization application 58 and/or the endpoint cybersecurity sensory agent 100 is stored in the memory subsystem or device 60/104. One or more of the hardware processors 56/106 communicate with the memory subsystem or device 60/104 and execute the detection prioritization application 58 and/or the endpoint cybersecurity sensory agent 100. Examples of the memory subsystem or device 60/104 may include Dual In-Line Memory Modules (DIMMs), Dynamic Random Access Memory (DRAM) DIMMs, Static Random Access Memory (SRAM) DIMMs, non-volatile DIMMs (NV-DIMMs), storage class memory devices, Read-Only Memory (ROM) devices, compact disks, solid-state, and other read/write memory technology. Because the computer system 20 and the client device 30 is/are known to those of ordinary skill in the art, no detailed explanation is needed.

The computer system 20 and the client device 30 may have other embodiments. This disclosure mostly discusses the computer system 20 as the server 24 and the client device 30 as a laptop computer. The cybersecurity detection prioritization service 52, however, may be easily adapted to other stationary or mobile computing examples, such as a desktop computer, a tablet computer, a smartwatch, and a network switch/router. The cybersecurity detection prioritization service 52 may also be easily adapted to other embodiments of smart devices, such as a television, an audio device, a remote control, and a recorder. The cybersecurity detection prioritization service 52 may also be easily adapted to still more smart appliances, such as washers, dryers, and refrigerators. Indeed, as cars, trucks, and other vehicles grow in electronic usage and in processing power, the cybersecurity detection prioritization service 52 may be easily incorporated into a vehicular controller.

The above examples of the cybersecurity detection prioritization service 52 may be applied regardless of the networking environment. The cybersecurity detection prioritization service 52 may be easily adapted to stationary or mobile devices having wide-area networking (e.g., 4G/LTE/5G/6G/7G cellular), wireless local area networking (WI-FI^{®}), near field, and/or BLUETOOTH^{®} capability. The cybersecurity detection prioritization service 52 may be applied to stationary or mobile devices utilizing any portion of the electromagnetic spectrum and a signaling standard (such as the IEEE 802 family of standards, GSM/CDMA/TDMA or other cellular standard, and/or the ISM band). The cybersecurity detection prioritization service 52, however, may be applied to a processor-controlled device operating in the radiofrequency domain and/or the Internet Protocol (IP) domain. The cybersecurity detection prioritization service 52 may be applied to a processor-controlled device utilizing a distributed computing network, such as the Internet (sometimes alternatively known as the "World Wide Web"), an intranet, a local-area network (LAN), and/or a wide-area network (WAN). The cybersecurity detection prioritization service 52 may be applied to a processor-controlled device utilizing power line technologies, in which signals are communicated via electrical wiring. Indeed, the many examples may be applied regardless of physical componentry, physical configuration, or communications standard(s).

The cybersecurity detection prioritization service 52 may utilize a processing component, configuration, or system. For example, the cybersecurity detection prioritization service 52 may be easily adapted to a desktop, mobile, or server central processing unit or chipset offered by INTEL^{®}, ADVANCED MICRO DEVICES^{®}, ARM^{®}, APPLE^{®}, TAIWAN SEMICONDUCTOR MANUFACTURING^{®}, QUALCOMM^{®}, or other manufacturer. The cybersecurity detection prioritization service 52 may even use multiple central processing units or chipsets, which could include distributed processors or parallel processors in a single machine or multiple machines. The central processing unit or chipset can be used in supporting a virtual processing environment. The central processing unit or chipset could include a state machine or logic controller. When any of the central processing units or chipsets execute instructions to perform "operations," this could include the central processing unit or chipset performing the operations directly and/or facilitating, directing, or cooperating with another device or component to perform the operations.

The cybersecurity detection prioritization service 52 may use packetized communications. When the computer system 20 or the client device 30 communicates via communications networks, information may be collected, sent, and retrieved. The information may be formatted or generated as packets of data according to a packet protocol (such as the Internet Protocol). The packets of data contain bits or bytes of data describing the contents, or payload, of a message. A header of each packet of data may be read or inspected and contain routing information identifying an origination address and/or a destination address.

The cybersecurity detection prioritization service 52 may utilize a signaling standard. The computer system 20, the client device 30, and/or the cloud computing environment 22 may mostly use wired networks to interconnect network members. However, the computer system 20, the client device 30, and/or the cloud computing environment 22 may utilize other communications devices using the Global System for Mobile (GSM) communications signaling standard, the Time Division Multiple Access (TDMA) signaling standard, the Code Division Multiple Access (CDMA) signaling standard, the "dual-mode" GSM-ANSI Interoperability Team (GAIT) signaling standard, or a variant of the GSM/CDMA/TDMA signaling standard. The cybersecurity detection prioritization service 52 may also utilize other standards, such as the I.E.E.E. 802 family of standards, the Industrial, Scientific, and Medical band of the electromagnetic spectrum, BLUETOOTH^{®}, low-power or near-field, and other standard or value.

The cybersecurity detection prioritization service 52 may be physically embodied on or in a computer-readable storage medium. This computer-readable medium, for example, may include CD-ROM, DVD, tape, cassette, floppy disk, optical disk, USB flash memory drive, memory card, memory drive, and large-capacity disks. This computer-readable medium, or media, could be distributed to end-subscribers, licensees, and assignees. A computer program product comprises processor-executable instructions for prioritizing the cybersecurity detections 28, as the above paragraphs explain.

The diagrams, schematics, illustrations, and the like represent conceptual views or processes illustrating examples of prioritizing the cybersecurity detections 28. The functions of the various elements shown in the figures may be provided through the use of dedicated hardware as well as hardware capable of executing instructions. The hardware, processes, methods, and/or operating systems described herein are for illustrative purposes and, thus, are not intended to be limited to a particular named manufacturer or service provider.

As used herein, the singular forms "a," "an," and "the" are intended to include the plural forms as well, unless expressly stated otherwise. It will be further understood that the terms "includes," "comprises," "including," and/or "comprising," when used in this Specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

It will also be understood that, although the terms first, second, and so on, may be used herein to describe various elements, these elements should not be limited by these terms. These terms are only used to distinguish one element from another. For example, a first computer or container could be termed a second computer or container and, similarly, a second device could be termed a first device without departing from the teachings of the disclosure.

The present teaching may also extend to the features of one or more of the following numbered clauses:

### CLAUSES

1. A method executed by a computer system that prioritizes a cybersecurity detection based on a machine context, comprising:
   comparing, by the computer system, the machine context to a cybersecurity machine contextual profile generated by a machine learning model trained using machine contexts; and
   generating, by the computer system, a detection priority associated with the cybersecurity detection based on the comparing of the machine context to the cybersecurity machine contextual profile generated by the machine learning model trained using the machine contexts.
2. The method of clause 1, further comprising associating the detection priority with a normal operation in response to determining that the machine context conforms to the cybersecurity machine contextual profile generated by the machine learning model.
3. The method of clause 1, further comprising associating the detection priority with an abnormal normal operation in response to determining that the machine context fails to conform to the cybersecurity machine contextual profile generated by the machine learning model.
4. The method of clause 1, further comprising receiving the machine context from a client device, the machine context generated by a cybersecurity sensory agent installed at the client device.
5. The method of clause 1, further comprising determining a detection count specified by the machine context.
6. The method of clause 5, further comprising generating the detection priority by comparing the machine context and the detection count to the cybersecurity machine contextual profile generated by the machine learning model trained using the machine contexts and their corresponding detection counts sampled from client devices.
7. The method of clause 1, further comprising adding entries to a database that logs the detection priority to the machine context.
8. A computer system that prioritizes a cybersecurity detection based on a client machine context, comprising:
   at least one central processing unit; and
   at least one memory device storing instructions that, when executed by the at least one central processing unit, perform operations, the operations comprising:
      receiving the cybersecurity detection reported via a cloud computing environment by a cybersecurity sensory agent installed at a client device;
      receiving the client machine context associated with the client device reported via the cloud computing environment by the cybersecurity sensory agent;
      comparing the client machine context to a cybersecurity machine contextual profile generated by a machine learning model trained using client machine contexts; and
      generating a detection priority associated with the cybersecurity detection based on the comparing the client machine context to the cybersecurity machine contextual profile generated by the machine learning model trained using the client machine contexts.
9. The computer system of clause 8, wherein the operations further comprise determining the client machine context is abnormal operation based on the cybersecurity machine contextual profile generated by the machine learning model trained using the client machine contexts.
10. The computer system of clause 8, wherein the operations further comprise determining the client machine context is normal operation based on the cybersecurity machine contextual profile generated by the machine learning model trained using the client machine contexts.
11. The computer system of clause 8, wherein the operations further comprise ranking the cybersecurity detection based on the comparing of the client machine context to the cybersecurity machine contextual profile generated by the machine learning model trained using the client machine contexts.
12. The computer system of clause 8, wherein the operations further comprise ranking the cybersecurity detection based on the detection priority.
13. The computer system of clause 8, wherein the operations further comprise training the machine learning model using historical detection priorities associated with historical machine contexts.
14. The computer system of clause 8, wherein the operations further comprise determining a detection count associated with the machine context.
15. The computer system of clause 14, wherein the operations further comprise generating the detection priority by comparing the machine context and the detection count to the cybersecurity machine contextual profile generated by the machine learning model trained using the machine contexts and their corresponding detection counts sampled from client devices.
16. A memory device storing instructions that, when executed by at least one central processing unit, perform operations, comprising:
   monitoring cybersecurity detections reported via a cloud computing environment by cybersecurity sensory agents sampling client devices for client machine contexts;
   comparing the client machine contexts to a cybersecurity machine contextual profile generated by a machine learning model trained using historical contexts sampled from the client devices; and
   generating detection prioritizations associated with the cybersecurity detections based on the comparing of the client machine contexts to the cybersecurity machine contextual profile generated by the machine learning model trained using the historical contexts sampled from the client devices.
17. The memory device of clause 16, wherein the operations further comprise determining a malicious operation associated with at least one of the client devices based on the cybersecurity machine contextual profile generated by the machine learning model trained using the historical contexts.
18. The memory device of clause 16, wherein the operations further comprise determining a normal operation associated with at least one of the client devices based on the cybersecurity machine contextual profile generated by the machine learning model trained using the historical contexts.
19. The memory device of clause 16, wherein the operations further comprise ranking the cybersecurity detections.
20. The memory device of clause 16, wherein the operations further comprise training the machine learning model using historical detection priorities associated with the historical contexts.

## Claims

1. A method executed by a computer system that prioritizes a cybersecurity detection based on a machine context, comprising:
comparing, by the computer system, the machine context to a cybersecurity machine contextual profile generated by a machine learning model trained using machine contexts; and
generating, by the computer system, a detection priority associated with the cybersecurity detection based on the comparing of the machine context to the cybersecurity machine contextual profile generated by the machine learning model trained using the machine contexts.

2. The method of claim 1, further comprising associating the detection priority with a normal operation in response to determining that the machine context conforms to the cybersecurity machine contextual profile generated by the machine learning model trained using the machine contexts.

3. The method of claim 1, further comprising associating the detection priority with an abnormal operation in response to determining that the machine context fails to conform to the cybersecurity machine contextual profile generated by the machine learning model trained using the machine contexts.

4. The method of any preceding claim, further comprising receiving the machine context from a client device, the machine context generated by a cybersecurity sensory agent installed at a client device.

5. The method of any preceding claim, further comprising receiving the cybersecurity detection reported via a cloud computing environment by a cybersecurity sensory agent installed at a client device

6. The method of any preceding claim, further comprising determining a detection count specified by the machine context.

7. The method of claim 6, further comprising generating the detection priority by comparing the machine context and the detection count to the cybersecurity machine contextual profile generated by the machine learning model trained using the machine contexts and their corresponding detection counts sampled from client devices.

8. The method of any preceding claim, further comprising adding entries to a database that logs the detection priority to the machine context.

9. A computer system that prioritizes a cybersecurity detection based on a client machine context, comprising:
at least one central processing unit; and
at least one memory device storing instructions that, when executed by the at least one central processing unit, perform operations comprising the method of any preceding claim..

10. The computer system of claim 9, wherein the operations further comprise ranking the cybersecurity detection based on the comparing of the machine context to the cybersecurity machine contextual profile generated by the machine learning model trained using the machine contexts.

11. The computer system of claim 9 or 10, wherein the operations further comprise ranking the cybersecurity detection based on the detection priority.

12. The computer system of any one of claims 9 to 11, wherein the operations further comprise training the machine learning model using historical detection priorities associated with historical machine contexts.

13. A computer program storing instructions that, when executed by at least one central processing unit, is configured to perform operations, comprising:
monitoring cybersecurity detections reported via a cloud computing environment by cybersecurity sensory agents sampling client devices for client machine contexts;
comparing the client machine contexts to a cybersecurity machine contextual profile generated by a machine learning model trained using historical contexts sampled from the client devices; and
generating detection prioritizations associated with the cybersecurity detections based on the comparing of the client machine contexts to the cybersecurity machine contextual profile generated by the machine learning model trained using the historical contexts sampled from the client devices.

14. The computer program of claim 13, wherein the operations further comprise determining a malicious operation associated with at least one of the client devices based on the cybersecurity machine contextual profile generated by the machine learning model trained using the historical contexts, or wherein the operations further comprise determining a normal operation associated with at least one of the client devices based on the cybersecurity machine contextual profile generated by the machine learning model trained using the historical contexts.

15. The computer program of any one of claims 13 or 14, wherein the operations further comprise at least one of:
ranking the cybersecurity detections;
training the machine learning model using historical detection priorities associated with the historical contexts.
